(19) **Europäisches Patentamt / European Patent Office / Office européen des brevets**

(11) **EP 4 300 248 B1**

(12) **EUROPEAN PATENT SPECIFICATION**

(45) Date of publication and mention
of the grant of the patent:
**25.12.2024 Bulletin 2024/52**

(21) Application number: **23182154.7**

(22) Date of filing: **28.06.2023**

(51) International Patent Classification (IPC):
**G05D 1/00** *(2024.01)*

(52) Cooperative Patent Classification (CPC):
**G05D 1/0295**

(54) **METHOD OF CONTROLLING A PLATOON COMBINATION**

VERFAHREN ZUR STEUERUNG EINER KOLONNENKOMBINATION

PROCÉDÉ DE COMMANDE D'UNE COMBINAISON DE PELOTON

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.06.2022 NL 2032320**

(43) Date of publication of application:
**03.01.2024 Bulletin 2024/01**

(73) Proprietor: **DAF Trucks N.V.
5643 TW Eindhoven (NL)**

(72) Inventors:
• **BEENAKKERS, Menno Adrianus
5643 TW Eindhoven (NL)**
• **HENDRIX, Bernardus Johannus Wilhelmus Maria
5643 TW Eindhoven (NL)**
• **KABOS, Thierry
5643 TW Eindhoven (NL)**

(74) Representative: **V.O.
P.O. Box 87930
2508 DH Den Haag (NL)**

(56) References cited:
**US-A1- 2019 384 322     US-A1- 2021 232 157
US-B2- 10 921 821**

## Description

Field of invention

The present invention relates generally to vehicle platooning. More particularly, the present invention relates to systems and methods for dynamically adjusting platoon control variables such as respective following distances for a number of vehicles such as tractor trailers.

Description of the prior art

The benefits of driver assistive vehicle platooning are well-established, as are the benefits of a reduced following distance between respective vehicles in a platoon orientation. For example, minimizing following distances can result in reduced aerodynamic drag for all vehicles in a platoon, and thereby improve respective fuel economies. At highway speeds, aerodynamic drag may be characterized as the greatest consumer of vehicle power, well in excess of the combined effects of rolling friction resistance and vehicle accessory losses. Test results have indicated that vehicles consistently achieve increased benefits correlating to closer following distances, although the energy-saving benefits may vary depending on the respective vehicle position within a platoon.

For safe operation of platoon driving, advanced braking control systems are to be implemented, along with vehicle-to-vehicle communication, to facilitate vehicle platooning while at the same time reducing the associated following distances to a maximal extent. For platoon driving, inter vehicle communication is established, to exchange control variables necessary for the calculus of platoon following distances. These distances are determined, amongst others, by delay times in the vehicle communication; by road conditions, truck load, and tire and brake system conditions. However, a challenge remains to safely reduce the following distance between vehicles to its minimal level. A following vehicle in a platoon must implement a safe following distance, which accounts for the successive detection of braking actions by the preceding vehicle. A conventional Automatic Emergency Braking system, which is normally equipped for non-platooning driving may, due to legally required (pre) warning phases of an emergency braking event, introduce time delays which can be too long for a vehicle in platooning mode to guarantee capability to prevent crashing into the preceding vehicle. Furthermore, while a cooperating adaptive cruise control system may provide a comfortable drive mode when vehicles are following each other in platoon mode in normal circumstances, such a system may be not sufficiently responsive to provide an emergency braking protocol when required in exceptional cases. US 10 921 821 B2 discloses a method according to the preamble of claim 1. US 2019/384322 A1 discloses an arbitrator.

Summary of the invention

In one aspect, it is aimed to provide a method of controlling a platoon combination of a leading vehicle immediately preceding a following vehicle, comprising equipping said leading and following vehicles with a vehicle longitudinal motion control system and a vehicle-to-vehicle communication system, said vehicle-to-vehicle communication system communicating a deceleration value of the leading vehicle from the leading vehicle to the following vehicle. The vehicle longitudinal motion control comprises an adaptive cruise control module, programmed to calculate a first deceleration value of the following vehicle; based on the deceleration value received from the leading vehicle through the vehicle-to-vehicle communication system. The vehicle longitudinal motion control system further comprises a cooperative collision avoidance module, programmed to calculate a second deceleration value in order to maintain a safe following distance and/or time headway of the following vehicle with respect to the leading vehicle in the platoon, in order to realize a full stop of the following vehicle to avoid colliding with the preceding vehicle. The vehicle longitudinal motion control comprises an arbitrator, programmed to output a maximum of said calculated first and second deceleration values; and the vehicle longitudinal motion control comprises a brake controller, programmed to execute an actual deceleration value based on the output of the arbitrator.

Accordingly, platoon control executed by a vehicle longitudinal motion control system of the above kind maintains a minimum safe following distance to prevent a collision, where the adaptive cruise control module, by its inherent limitations of delay and deceleration limitation, is unable to do so.

BRIEF DESCRIPTION OF THE DRAWINGS

The invention will be further elucidated in the figures:

Figure 1 shows a schematic layout of a platoon formed by a leading and following vehicle;
Figure 2 shows an exemplary layout for a vehicle brake control system and intercommunication system;
Figure 3 illustrates schematic response curves of a vehicle longitudinal motion control system;

Figure 4 shows an exemplary chart which relates relative vehicle speeds and relative vehicle distances to a bumpstop area;

Figure 5 shows an exemplary schematic system layout for carrying out the method according to the invention;

Figure 6 (A-B) shows two scenarios for braking events of a leading and following vehicle; and

Figure 7 (A-B) shows exemplary values in a lookup table relating a current gross combination weight of a vehicle to a maximum brake value ("upper") and to a minimum brake value ("lower") of the vehicle.

DETAILED DESCRIPTION

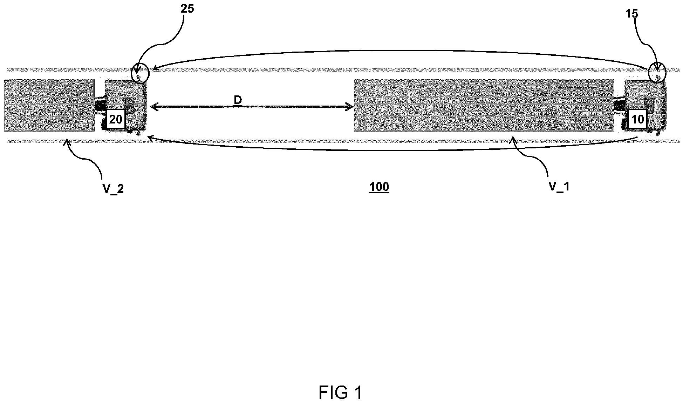

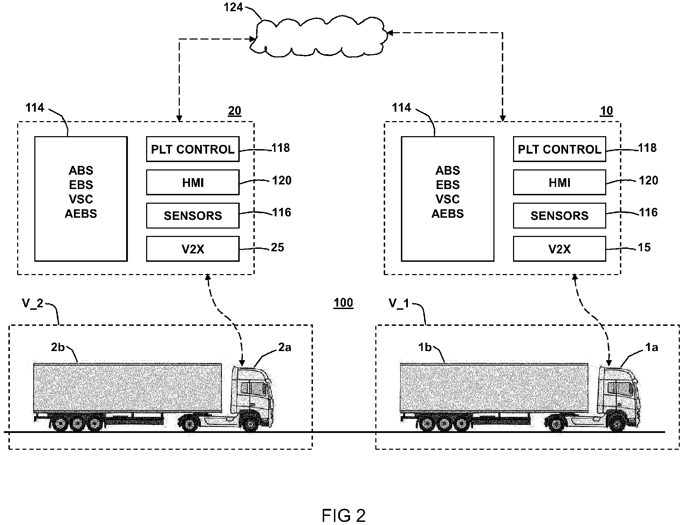

Turning to Figure 1, there is disclosed a vehicle platooning control system 100 including a leading vehicle V_1 and following vehicle V_2 in a platoon combination. The leading vehicle V_1 and following vehicle V_2 are each equipped with a vehicle longitudinal motion control system schematically indicated at 10, 20 respectively and a vehicle-to-vehicle communication system schematically indicated at 15, 25 respectively; further exemplified in Figure 2. The vehicle longitudinal motion control system 20 is configured to calculate an intervehicle distance / following distance D and/or time headway of the following vehicle V_2 with respect to the leading vehicle V_1 in the platoon. Amongst others the vehicle-to-vehicle communication system may be configured to communicate the predicted deceleration of the leading vehicle, from the leading vehicle V_1, via its vehicle-to-vehicle communication system 15, to vehicle-to-vehicle communication system 25 of the following vehicle V_2. The vehicle-to-vehicle communication system can be any suitable system, typically communicating via radio signals or any other suitable form, in particular WiFi and may be provided with redundant communication facilities.

Figure 2 shows vehicle platooning control system 100 as disclosed herein may be provided with respect to at least a first vehicle V_1 (truck 1a and trailer 1b) and a second vehicle V_2 (truck 2a; trailer 2b). In certain embodiments, the vehicle platooning control aspects may be implemented solely via components residing upon the vehicles V_1 V_2 themselves. In other embodiments, the vehicles may each be configured to communicate not only directly with each other but further via a communications network 124 e.g. with a remote computing network including for example one or more servers configured to implement platooning control aspects.

Each vehicle in a potential platoon may be considered to have at least certain minimum structural components in order for various embodiments of the present disclosure to be implemented. As shown in the example embodiment of FIG. 2, the vehicles may include one or more vehicle longitudinal motion control systems 10, 20, condition sensors 116, local platooning control circuitry/processor 118 functionally linked to the braking control systems 114, and a user interface 120 which typically includes graphical display components but may also include any other user input/output elements as may be necessary or desirable for conveying information to and from the driver of the respective vehicle.

In the particular embodiment as shown in FIG. 1 and FIG. 2, the vehicle longitudinal motion control and platoon implementation systems 10, 20 as necessary to provide the recited functions herein may be selected from various systems as are known to those skilled in the art including but not limited to an Anti-Lock Braking System ("ABS") for the vehicle, and to the extent that the vehicle includes a tractor and a trailer further an ABS for the respective trailer 1b/2b, Vehicle Stability Control ("VSC"), Advanced Emergency Braking Systems AEBS, Vehicle-to-Vehicle/Infrastructure Communications ("V2X") 15, 25, Electronic Braking System ("EBS"), and the like. A trailer ABS may generally be considered to be configured for communication of ABS events with at least the respective tractor.

In certain embodiments, otherwise conventional braking control systems 114, such as the AEBS for example, may be supplemented or otherwise configured to include hardware, software, or some combination thereof so as to execute a vehicle platooning algorithm in accordance with the present disclosure. Alternatively, vehicle platooning algorithms and components may be separately associated with control block 118. In various embodiments, the braking control systems, and more particularly the AEBS, may be implemented for distance measurement using techniques as are known to those of skill in the art.

The vehicle sensors 116 may be configured to provide at least certain information as needed to execute functions for a particular embodiment of the platooning control system, including for example a following distance between a given pair of vehicles, relative velocity and acceleration/deceleration values for the respective vehicle, a pressure value with respect to a braking actuator for the respective vehicle, front and rear radar/camera/LIDAR/sensors for distance measurement, image capturing and the like, side lane monitoring devices, alternative pressure sensors integrally mounted to or associated with solenoid valves, etc.

Specifically platooning control block 118 may comprise a processor configured to execute a computer program product and thereby direct the performance of operations comprising: deriving for the respective vehicle a current gross combination weight value; relating the current gross combination weight of the respective vehicle to a maximum brake value and to a minimum brake value derived from a lookup table. Such values of a current gross combination weight value can be derived from sensors 116 by means known in the art, e.g. wherein the gross combination weight value of each leading and following vehicle is derived from an electronic brake system or transmission system of the said each leading and following vehicle.

In principle, a 'safe distance' (its nominal value) may be calculated by any suitable control algorithm that supersedes a regular adaptive cruise control and may be based on a number of considerations not discussed in detail, such as an augmentation of this nominal value to correct for a delay in the vehicle-to-vehicle communication; and an offset defining a minimum following distance at standstill. In general, the safe distance will be calculated based on actual vehicle speeds, wherein increasing speeds will require an increasing following distance in order to be able to anticipate a full stop scenario of the leading vehicle.

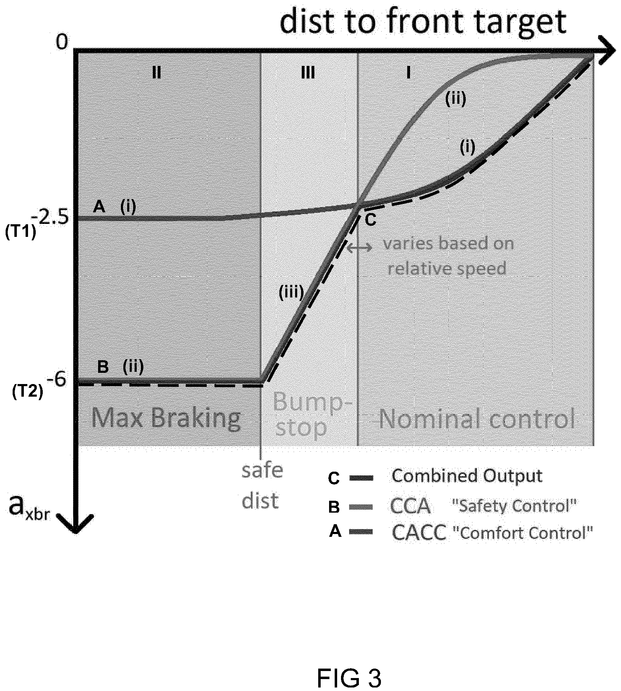

Figure 3 illustrates schematic individual output response curves A and B of a vehicle longitudinal motion control system that comprises a cooperative collision avoidance module. The shown schematic has a 'distance to front target' on the x-axis, and a corresponding (negative) deceleration value Axbr as corresponding deceleration value. A first response curve A of first deceleration values (i) is provided by a (coordinated) adaptive cruise controller (CACC) programmed to calculate a first deceleration value of the following vehicle; based on the deceleration value received from the leading vehicle by the vehicle-to-vehicle system. The adaptive cruise controller (see further below) outputs a response curve A of deceleration values (i) that is typically limited, in the example to a threshold value that ranges between 1.5 and 3 $m/s^2$ for an empty vehicle. In the same figure, a second response curve B of second deceleration values (ii) is shown, programmed by a cooperative collision avoidance (CCA) module, that calculates these (second) deceleration values for maintaining a safe following distance and/or time headway of the following vehicle with respect to the leading vehicle in the platoon, in particular in order to realize a full stop of the following vehicle. As can be imagined, for relative large actual values of the 'distance to front target' or inter vehicle distance in area I, this 'safe distance' deceleration value is quite low, since the vehicle can be easily stopped to standstill.

However, for relative low actual values of the distance to the leading vehicle the second deceleration value will sharply increase, for a further decreasing inter vehicle distance. Combined response (dashed) curve C is thus initially formed (at larger distances) by the CACC response curve A, which offers a comfortable progress for following the leading vehicle. However, when the CACC response curve approaches a first threshold value (T), and the distance to front target still diminishes, combined response curve is formed by the second response curve B, that forms a maximum of the first (response A) and second (response B) deceleration values. The output of the combined curve C will be inputted in a brake controller, programmed to execute an actual deceleration value.

In the Figure 3, it is shown that response curve B is limited to a maximum attainable vehicle deceleration (in the figure of -6 $m/s^2$), which effectively means that a following vehicle should not be in the 'forbidden' area II that is limited between 0 and the calculated minimal safe distance, which is vehicle speed dependent. In this area II, the brake controller of the vehicle will be instructed to execute an emergency brake event based on a maximum brake power of the vehicle.

Furthermore, the Figure 3 shows a 'bumpstop area' III wherein a deceleration value is provided by a third deceleration value calculated by a bumpstop control module programmed to replace the second deceleration value by a third deceleration value of the following vehicle; if the second deceleration value exceeds a first threshold value, wherein the third deceleration value is larger than the calculated first deceleration value.

In the bumpstop area III, the arbitrator will thus not provide a second braking value that is (close to) the maximum brake value T2, but will provide a third deceleration value (iii) that gradually increase braking performance with decreasing following distance, to try to keep up with decelerations of a preceding vehicle without executing an emergency brake stop, but at decelerations considerably higher than attainable through CACC brake control. For instance, the third acceleration value (iii) may range, as long as the minimum value of a 'safe distance' is not violated, depending on a vehicle distance between leading and following vehicles, between 2.5 $m/s^2$ and a maximum braking value, for an empty vehicle.

In this bump stop region III, the vehicle will execute substantial decelerations up to even a maximum brake value, but without an attempt to reach standstill.

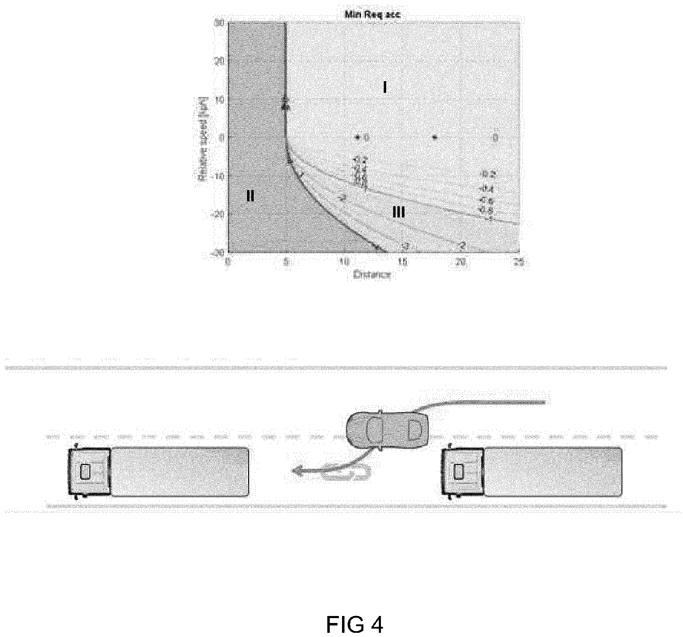

Figure 4 shows an exemplary chart which relates relative vehicle speeds and relative vehicle distances to the identified 'safe distance area' II, wherein the CCA controller takes over in the arbitration for a maximum deceleration value; a normal area I usually controlled by the CACC controller, and a bumpstop area III, which is an intermediate area with increasing deceleration values, e.g. between -1 and -4, still below a maximum deceleration value of the following vehicle, which in the Figure plateaus at a value of -4. The bumpstop area III offers a convenient way to handle collision avoidance scenarios without performing full stop emergency braking. For instance in one scenario a cut-in vehicle suddenly limits the intervehicle distance from a 'safe distance' to a distance that is below the safe distance. However, instead of executing an emergency braking action, which would be executed based solely on the distance to the preceding vehicle, the CCA controller is programmed to delay the maximum brake instruction to the brake controller in the event of a registered cut-in vehicle.

In such a scenario, the preceding vehicle is assumed to have a constant speed, in particular, substantially equal to the following vehicle without any deceleration.

For a required minimum following distance $\Delta s_0$ a deceleration $a_f$ is calculated by the bumpstop control module as

$$(1) \quad : \quad a_f = -\frac{1}{2}v_0^2/\Delta s_0$$

Alternatively, in a scenario wherein a following distance d does not reach a minimum safe distance and the leading vehicle brakes with an assumed constant deceleration $a_l$, a stopping time $t$ and stopping distance s will be calculated by bumpstop control module as respectively

$$(2) \quad : \quad t = -\frac{v_0}{a}$$

$$(3) \quad : \quad s = -\frac{1}{2}v_0^2/a$$

A deceleration value in order to maintain a safe following distance and/or time headway of the following vehicle with respect to the leading vehicle in the platoon is then calculated in bumpstop area III as follows

$$(4) \quad : \quad a_f = -\frac{\frac{1}{2}v_{0f}^2}{\frac{-\frac{1}{2}v_{0l}^2}{a_l}+d}$$

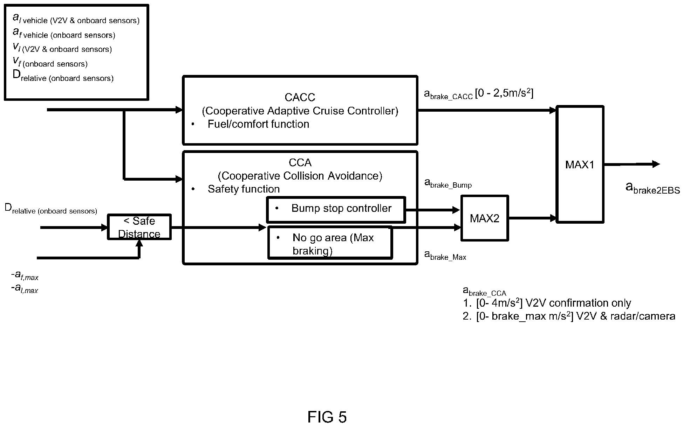

Figure 5 shows a schematic system layout for carrying out the method as previously disclosed. In the system, from a vehicle-to-vehicle communication system (see Figure 2) a variety of actual data is processed for inputting to a CACC module, which is the coordinated adaptive cruise control module that is programmed to calculate a first deceleration value of the following vehicle; based on the deceleration value received from the leading vehicle by the vehicle-to-vehicle system. The CACC is not equipped for handling collision risks, but provides an optimized following behavior for fuel and comfort; and is focused on 'string stability' which avoids oscillations in acceleration and braking.

The data, in particular accelerations and speeds of the leading and following vehicle are inputted in parallel into the CACC controller, adapted to provide a cruise control function, and into the CCA controller, adapted to provide a safe following distance or time headway of the following vehicle. For providing the CCA control, a relative following distance *Drelative* of the following vehicle is monitored by onboard sensors. It is noted that the CCA control is not immediately dependent on wireless input, but calculated a safe distance based, e.g. on maximum brake values of the leading and following vehicles, $-a_{f\,max}$ and $-a_{l,max}$, that may be transmitted prior

While a bump stop control may be absent or may even be provided by a cruise control function, the CCA module calculates the safe distance from several physical quantities, including maximum brake decelerations of leading and following vehicles, and actual speed of the leading and following vehicles; in order to bring the following vehicle to full stop when required. A maximum arbitration is carried out for the bump stop and max braking calculation as a second input to a MAX1 arbitrator programmed to output a maximum of said calculated first ($a_{brake\_CACC}$) and second deceleration ($a_{brake\_Max}$) values. Alternatively the second deceleration value $a_{brake\_Max}$ may be replaced by a third deceleration value $a_{brake\_Bump}$ by means of another arbitrator MAX2; if the second deceleration value $a_{brake\_Max}$ exceeds a first threshold value, and the third deceleration value $a_{brake\_Bump}$ is larger than the calculated second deceleration value $a_{brake\_Max}$.

This provides an increased deceleration which will induce 'bumpstop' behavior in an attempt to prevent going into a full brake event.

In the shown example, such threshold value can be provided by the calculated second deceleration value. At all times, the deceleration value is lower or equal than the maximum brake deceleration of the following vehicle.

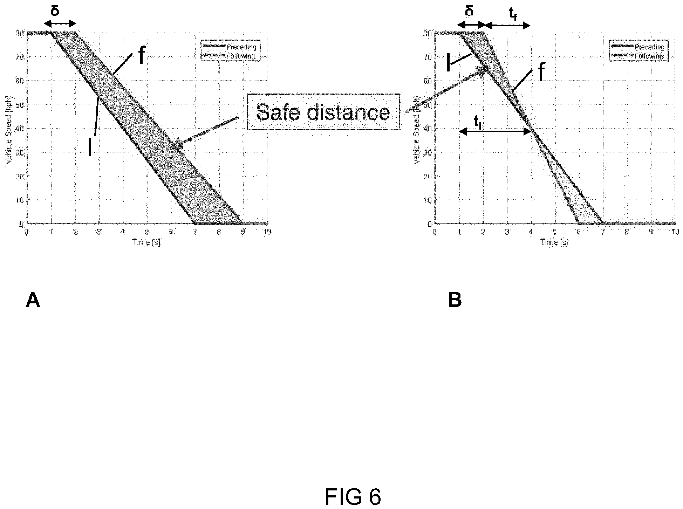

Figure 6 shows two scenarios for max braking events of a leading and following vehicle. Generally, a cooperative collision avoidance module may calculate the safe distance from a difference of terms including maximum brake decelerations of leading and following vehicles and actual speed of the leading and following vehicles. In the first scenario A, the leading vehicle has a maximum higher brake performance and will reach standstill first. In this situation, the following vehicle has to maintain a distance at all times, since it will still be braking when the leading vehicle reaches standstill (e.g. at Time 7 seconds) and the following vehicle will only reach standstill at Time 9 seconds.

For this scenario a stopping time t and stopping distance s will be calculated as respectively

$$(5) \quad : \quad t = -v_0/a \text{ and}$$

$$(6) \quad : \quad s = -\frac{1}{2}v_0^2/a$$

With $v_0$ an initial speed and $a$ a (maximum) deceleration.

A safe distance $SD$ will thus be a difference of both terms for leading (*l*) and following (*f*) vehicle respectively, including a time delay $\delta$:

$$(7) \quad : \quad SD = -\frac{\frac{1}{2}v_{0f}^2}{a_f} + v_{0f}\delta + \frac{\frac{1}{2}v_{0l}^2}{a_l}$$

For a following vehicle with a higher brake performance the following vehicle will reach a standstill when the leading vehicle is still moving - away from the following vehicle.

For this situation a safe distance $SD$ can be smaller, since the safe distance is determined by an intermediate time *tl,* when both vehicle speeds (leading: *l* ; following: *f*) are equal:

$$(8) \quad : \quad v_l = v_f$$

$$(9) \quad : \quad a_l t_l + v_{0l} = a_f t_f + v_{0f}$$

With

$$(10) \quad : \quad t_f = t_l - \delta$$

Amounting to

$$(11) \quad : \quad SD = \frac{1}{2}a_f(t_l - \delta)^2 - \frac{1}{2}a_l t_l^2 + (v_{0f} - v_{0l})t_l$$

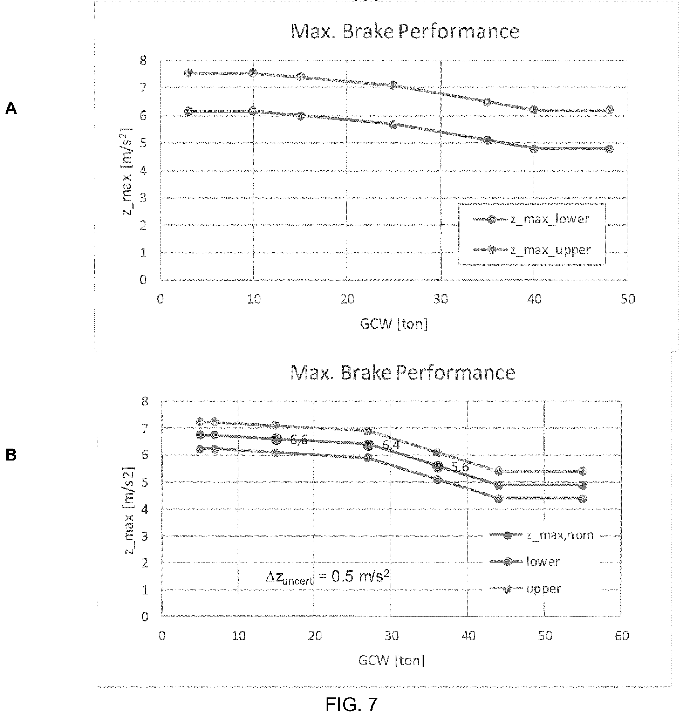

As mentioned the invention is not limited to a particular way for calculating a safe distance. However, as shown in Figure 7, it may be based on exemplary values of a lookup table relating a current gross combination weight (GCW) of a vehicle to an estimated maximum brake value and to an estimated minimum brake value of the vehicle wherein the lookup table relates a gross combination weight of a vehicle to a maximum brake performance value that estimates a maximum deceleration value of the performance truck for said gross combination weight value and a minimum brake value that estimates a minimum deceleration value of the truck for said gross combination weight value.

The brake performance estimation can be used, for instance, to calculate a safe time headway for platooning. The brake performance estimator parameters (i.e. nominal maximum brake value and uncertainty bands) can be determined via maximum brake measurements with target vehicles. Additionally a safe time headway for platooning can be calculated based on the brake performance parameters applied to the host and preceding vehicle, and an additional assumption on the (communication) time delay between the start of a braking action of the preceding vehicle and that braking action arriving via V2X at the host vehicle. This scheme has the advantage that the influence of all other maximum brake determining factors, such as the brake supply pressure, brake temperature, load distribution, tires etc. are implicitly accounted for in this method.

It is shown in the example 3B that maximum and minimum brake values are kept constant for gross combination weight values below a mimimum gross combination value., e.g. below a minimum value of 7 tonnes, which is typically the weight of an empty truck without trailer, but this could be a different value, e.g. a range in the 5-9 tonnes and above (see example 3A).

For values in a mid range, brake performance estimation parameters are derived from practical test, and it appears that there is an approximately linear relationship between deceleration and mass, as is known from the second law of motion. The tests are performed for a number of GCW values, in particular a full value: wherein the GCW is about 38-42 tonnes, a half empty value, where the GCW is about 25-30 tonnes, and an empty value, having a GCW of about 12-15 tonnes.

Also for values above a maximum value, maximum and minimum brake performance values are kept constant for gross combination weight values exceeding a maximum gross combination weight value of the vehicle. e.g. for a maximum gross combination weight value determined by legislation, typically between 40 and 50 ton.

In Figure 7B it is shown that brake performance estimation is taken into account in uncertainty bands ($\pm \Delta z_{uncert}$) and is not separately estimated and calculated.

In an example, tests are performed with different tractors, different brake supply pressures (e.g. ranging between 8.5 -12.5 bar), brake temperatures (e.g. cold brakes and brakes about 100/200 °C), tires (e.g. lower and higher pressures), load distributions and conditions (empty, half full, full), and weather conditions (wet/dry). It is found that these varied conditions all fit in a bandwidth between a minimum and maximum deceleration value. Thus the test conditions that are included vary brake temperature conditions; brake pressure supply conditions; tire pressure conditions and varied load distribution conditions. Here it is assumed that the load is distributed within legal requirements. This results in an uncertainty band wherein a difference between a maximum and minimum brake performance typically ranges between 0, 5 and 3, more specifically between 0.8 and 2.0, more specifically about 1.5 m/s2.

Additionally, the safe following distance and/or time headway are augmented to correct for a delay in the vehicle-to-vehicle communication; and an offset defining a minimum following distance at standstill. A delay could range between 0.05 and 0.2 seconds. While the headway can be almost fully attributed for a brake headway, where a standstill would leave no headway, it is desirable that the driver still has some headway on standstill, for instance, about 1 to 7 meters.

The term "module" as in "storage module" or "receiver module" or "control module" is used to emphasize the modular character of these units, i.e. the functionality of the system may be separated into independent, interchangeable units. The term "user interface" may comprise one or more hardware elements configured to perform operational acts in accordance with the present systems and methods, such as to provide control signals to the various other module components. The processor may be a dedicated processor for performing in accordance with the present system or may be a general-purpose processor wherein only one of many functions operate for performing in accordance with the present system. The processor may operate utilizing a program portion, multiple program segments, or may be a hardware device utilizing a dedicated or multi-purpose integrated circuit. Any type of processor may be used such as a dedicated or shared one. The processor may include micro-controllers, central processing units (CPUs), digital signal processors (DSPs), ASICs, or any other processor(s) or controller(s) such as digital optical devices, or analog electrical circuits that perform the same functions, and employ electronic techniques and architecture. The controller or processor may further comprise a memory that may be part of or operationally coupled to the controller. The memory may be any suitable type of memory where data is stored. Any medium known or developed that can store and/or transmit information suitable for use with the present systems and methods may be used as a memory. The memory may also store user preferences and/or application data accessible by the controller for configuring it to perform operational acts in accordance with the present systems and methods.

While example embodiments are shown for systems and methods, also alternative ways may be envisaged by those skilled in the art having the benefit of the present disclosure for achieving a similar function and result. E.g. some components may be combined or split up into one or more alternative components. Finally, these embodiments are intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the present systems and methods as set forth in the claims that follow. The specification and drawings are accordingly to be regarded in an illustrative manner and are not intended to limit the scope of the appended claims.

## Claims

1.  Method of controlling a platoon combination of a leading vehicle immediately preceding a following vehicle, comprising

    - equipping said leading and following vehicles with a vehicle longitudinal motion control system and a vehicle-to-vehicle communication system,
    - said vehicle-to-vehicle communication system communicating a deceleration value of the leading vehicle from the leading vehicle to the following vehicle;
    - wherein the vehicle longitudinal motion control comprises an adaptive cruise control module, programmed to calculate a first deceleration value of the following vehicle; based on the deceleration value received from the leading vehicle by the vehicle-to-vehicle system;
    - **characterised in that** the vehicle longitudinal motion control system comprises a cooperative collision avoidance module, programmed to calculate a second deceleration value in order to maintain a safe following distance and/or time headway of the following vehicle with respect to the leading vehicle in the platoon;
    - wherein the vehicle longitudinal motion control comprises an arbitrator, programmed to output a maximum of said calculated first and second deceleration values; and
    - the vehicle longitudinal motion control comprises a brake controller, programmed to execute an actual deceleration value based on the output of the arbitrator.

**2.** The method according to claim 1, wherein the cooperative collision avoidance module calculates the safe distance from a difference of terms including maximum brake decelerations of leading and following vehicles and actual speed of the leading and following vehicles; in order to bring the following vehicle to full stop.

**3.** The method according to any preceding claim, wherein the cooperative collision avoidance module further comprises a bumpstop control module programmed to replace the second deceleration value by a third deceleration value of the following vehicle; if the second deceleration value exceeds a first threshold value, wherein the third deceleration value is larger than the calculated second deceleration value.

**4.** The method according to claim 3, wherein the third acceleration value is lower than the maximum brake value of the following vehicle.

**5.** The method according to claim 4, wherein the third acceleration value ranges, depending on a vehicle distance between leading and following vehicles, between -1 m/s$^2$ and a maximum braking value, for an empty vehicle.

**6.** The method according to any of claims 3 or 4, wherein the first threshold value ranges between -1 and -3 m/s$^2$ for an empty vehicle.

**7.** The method according to any preceding claim, wherein the arbitrator is programmed to delay the output of the arbitrator to the brake controller in the event of a registered cut-in vehicle.

**8.** The method according to claim 1, wherein the gross combination weight value of each leading and following vehicle is derived from an electronic brake system, transmission system or other platooning control system of the said each leading and following vehicle.

**9.** The method according to any preceding claim, wherein the safe following distance is augmented to correct for and an offset defining a minimum following distance at standstill.

**Patentansprüche**

**1.** Verfahren zum Steuern einer Kolonnenkombination eines führenden Fahrzeugs, das sich direkt vor einem folgenden Fahrzeug befindet, das Folgendes umfasst

- Ausrüsten des führenden und des folgenden Fahrzeugs mit einem Fahrzeug-Längsbewegungssteuersystem und einem Fahrzeug-zu-Fahrzeug-Kommunikationssystem,
- wobei das Fahrzeug-zu-Fahrzeug-Kommunikationssystem einen Verzögerungswert des vorausfahrenden Fahrzeugs von dem vorausfahrenden Fahrzeug an das nachfolgende Fahrzeug übermittelt;
- wobei die Fahrzeug-Längsbewegungssteuerung ein adaptives Tempomat-Steuermodul umfasst, das dazu programmiert ist, einen ersten Verzögerungswert des nachfolgenden Fahrzeugs basierend auf dem Verzögerungswert zu berechnen, der von dem vorausfahrenden Fahrzeug empfangen wird, durch das Fahrzeug-zu-Fahrzeug-System;
- **dadurch gekennzeichnet, dass** das Fahrzeug-Längsbewegungssteuersystem ein kooperatives Kollisionsvermeidungsmodul umfasst, das dazu programmiert ist, einen zweiten Verzögerungswert zu berechnen, um eine sichere Folgedistanz und/oder einen sicheren zeitlichen Vorsprung des nachfolgenden Fahrzeugs in Bezug auf das vorausfahrende Fahrzeug in der Kolonne aufrechtzuerhalten;
- und wobei die Fahrzeug-Längsbewegungssteuerung einen Arbitrator umfasst, der dazu programmiert ist, ein Maximum des berechneten ersten und zweiten Verzögerungswerts auszugeben; und
- die Fahrzeug-Längsbewegungssteuerung eine Bremssteuervorrichtung umfasst, die dazu programmiert ist, einen tatsächlichen Verzögerungswert basierend auf der Ausgabe des Arbitrators auszuführen.

**2.** Verfahren nach Anspruch 1, wobei das kooperative Kollisionsvermeidungsmodul eine sichere Distanz aus einer Differenz von Termen berechnet, die die maximalen Bremsverzögerungen des vorausfahrenden und des nachfolgenden Fahrzeugs und die tatsächliche Geschwindigkeit des vorausfahrenden und des nachfolgenden Fahrzeugs beinhalten, um das nachfolgende Fahrzeug zum Stillstand zu bringen.

**3.** Verfahren nach einem vorstehenden Anspruch, wobei das kooperative Kollisionsvermeidungsmodul ferner ein Bumpstop-Steuermodul umfasst, das dazu programmiert ist, den zweiten Verzögerungswert durch einen dritten Verzögerungswert des nachfolgenden Fahrzeugs zu ersetzen, falls der zweite Verzögerungswert einen ersten Schwellenwert überschreitet, wobei der dritte Verzögerungswert größer als der berechnete zweite Verzögerungswert ist.

**4.** Verfahren nach Anspruch 3, wobei der dritte Beschleunigungswert niedriger ist als der maximale Bremswert des nachfolgenden Fahrzeugs.

**5.** Verfahren nach Anspruch 4, wobei der dritte Beschleunigungswert in Abhängigkeit von einer Fahrzeugdistanz zwischen dem vorausfahrenden und dem nachfolgenden Fahrzeug von -1 m/s$^2$ und bis zu einem maximalen Bremswert für ein leeres Fahrzeug reicht.

**6.** Verfahren nach einem der Ansprüche 3 oder 4, wobei der erste Schwellenwert von -1 bis -3 m/s$^2$ für ein leeres Fahrzeug reicht.

**7.** Verfahren nach einem vorstehenden Anspruch, wobei der Arbitrator dazu programmiert ist, die Ausgabe des Arbitrators an die Bremssteuervorrichtung im Falle eines registrierten dazwischen hineinfahrenden Fahrzeugs zu verzögern.

**8.** Verfahren nach Anspruch 1, wobei der Wert des kombinierten Gesamtgewichts jedes des vorausfahrenden und des nachfolgenden Fahrzeugs aus einem elektronischen Bremssystem, Übertragungssystem oder anderen Kolonnensteuersystem jedes des vorausfahrenden und des nachfolgenden Fahrzeugs abgeleitet wird.

**9.** Verfahren nach einem vorstehenden Anspruch, wobei die sichere Folgedistanz erhöht wird, um einen Versatz zu korrigieren, der einen Mindestfolgeabstand bei Stillstand definiert.

**Revendications**

**1.** Procédé de contrôle d'une combinaison de peloton constituée d'un véhicule de tête précédant immédiatement un véhicule suiveur, comprenant

- équiper lesdits véhicules de tête et suiveur d'un système de commande de mouvement longitudinal de véhicule et d'un système de communication de véhicule à véhicule,
- ledit système de communication de véhicule à véhicule communiquant une valeur de décélération du véhicule de tête depuis le véhicule de tête au véhicule suiveur ;
- dans lequel le contrôle du mouvement longitudinal de véhicule comprend un module régulateur de vitesse adaptatif, programmé pour calculer une première valeur de décélération du véhicule suiveur ; sur la base de la valeur de décélération reçue du véhicule de tête par le système de communication de véhicule à véhicule ;
- **caractérisé en ce que** le système de contrôle de mouvement longitudinal de véhicule comprend un module d'évitement de collision coopératif, programmé pour calculer une deuxième valeur de décélération afin de maintenir une distance de suivi et/ou une progression temporelle de sécurité du véhicule suiveur par rapport au véhicule de tête dans le peloton ;
- dans lequel le contrôle du mouvement longitudinal de véhicule comprend un arbitre, programmé pour délivrer en sortie une valeur maximum desdites première et deuxième valeurs de décélération calculées ; et
- la commande de mouvement longitudinal de véhicule comprend un dispositif de contrôle de freinage, programmé pour exécuter une valeur de décélération réelle sur la base de la sortie de l'arbitre.

**2.** Procédé selon la revendication 1, dans lequel le module d'évitement de collision coopératif calcule la distance de sécurité à partir d'une différence de termes comportant des décélérations de freinage maximum des véhicules de tête et suiveur et une vitesse réelle des véhicules de tête et suiveur ; afin de mettre le véhicule suiveur à l'arrêt complet.

**3.** Procédé selon l'une quelconque des revendications précédentes, dans lequel le module d'évitement de collision coopératif comprend en outre un module de commande de butée programmé pour remplacer la deuxième valeur de décélération par une troisième valeur de décélération du véhicule suiveur ; si la deuxième valeur de décélération dépasse une première valeur de seuil, dans lequel la troisième valeur de décélération est supérieure à la deuxième valeur de décélération calculée.

**4.** Procédé selon la revendication 3, dans lequel la troisième valeur d'accélération est inférieure à la valeur de freinage maximum du véhicule suiveur.

**5.** Procédé selon la revendication 4, dans lequel la troisième valeur d'accélération est comprise, en fonction d'une distance de véhicules entre les véhicules de tête et suiveur, entre - 1 m/s$^2$ et une valeur de freinage maximum, pour un véhicule à vide.

**6.** Procédé selon l'une quelconque des revendications 3 ou 4, dans lequel la première valeur de seuil est comprise entre -1 et -3 m/s$^2$ pour un véhicule à vide.

**7.** Procédé selon l'une quelconque des revendications précédentes, dans lequel le dispositif d'arbitrage est programmé pour retarder la sortie du dispositif d'arbitrage vers le dispositif de contrôle de freinage dans le cas d'un véhicule enregistré effectuant une queue de poisson.

**8.** Procédé selon la revendication 1, dans lequel la valeur de poids de combinaison brute de chaque véhicule de tête et suiveur est dérivée d'un système de freinage électronique, d'un système de transmission ou autre système de commande de circulation en peloton dudit chaque véhicule de tête et suiveur.

**9.** Procédé selon l'une quelconque des revendications précédentes, dans lequel la distance de suivi de sécurité est augmentée pour corriger un décalage définissant une distance de suivi minimale à l'arrêt.

25

15

D

20

10

V_2

100

V_1

FIG 1

FIG 2

FIG 3

FIG 4

$a_{l}$ vehicle (V2V & onboard sensors)
$a_{f}$ vehicle (onboard sensors)
$v_{l}$ (V2V & onboard sensors)
$v_{f}$ (onboard sensors)
$D_{relative}$ (onboard sensors)

CACC
(Cooperative Adaptive Cruise Controller)
- Fuel/comfort function

$a_{brake\_CACC}$ $[0 - 2,5 m/s^2]$

CCA
(Cooperative Collision Avoidance)
- Safety function

$a_{brake\_Bump}$

- Bump stop controller

- No go area (Max braking)

$a_{brake\_Max}$

MAX2

MAX1

$a_{brake2EBS}$

$D_{relative}$ (onboard sensors)

< Safe Distance

$-a_{f,max}$
$-a_{l,max}$

$a_{brake\_CCA}$
1. $[0- 4 m/s^2]$ V2V confirmation only
2. $[0- brake\_max\ m/s^2]$ V2V & radar/camera

FIG 5

A

B

FIG 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10921821 B2

- US 2019384322 A1